Europäisches Patentamt

European Patent Office

Office européen des brevets

(19)

(11) Veröffentlichungsnummer: **0 171 571**
**B1**

(12) **EUROPÄISCHE PATENTSCHRIFT**

(45) Veröffentlichungstag der Patentschrift:
07.12.88

(51) Int. Cl.⁴: **H 02 K 1/16**

(21) Anmeldenummer: **85108143.0**

(22) Anmeldetag: **01.07.85**

(54) **Statorkörper mit lamellierten Pressplatten.**

(30) Priorität: **09.08.84 CH 3824/84**

(43) Veröffentlichungstag der Anmeldung:
**19.02.86 Patentblatt 86/8**

(45) Bekanntmachung des Hinweises auf die Patenterteilung:
**07.12.88 Patentblatt 88/49**

(84) Benannte Vertragsstaaten:
**CH DE FR IT LI**

(56) Entgegenhaltungen:
**EP-A- 0 017 607**
**CH-A- 425 981**
**DE-B- 1 080 674**

(73) Patentinhaber: **BBC Brown Boveri AG, Haselstrasse,
CH-5401 Baden (CH)**

(72) Erfinder: **Brem, Ernst, Saegestrasse 21,
CH-8952 Schlieren (CH)**
Erfinder: **Merki, Josef, Sandgasse 490,
CH-5303 Würenlingen (CH)**

ACTORUM AG

## Beschreibung

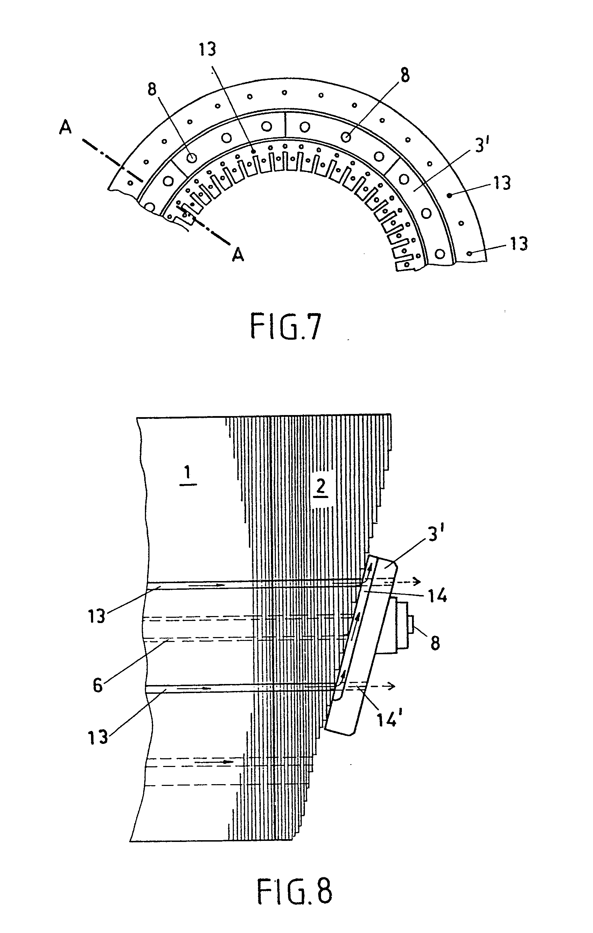

Die Erfindung bezieht sich auf einen Statorkörper nach dem Oberbegriff des Patentanspruchs 1. Mit diesem Oberbegriff nimmt die Erfindung auf einen Stand der Technik Bezug, wie er beispielsweise aus der CH-Zeitschrift «Bulletin SEV/VSE», Bd. 68 (1977), Nr. 14, S. 685–689, insbesondere Fig. 7, 8 und 9, hervorgeht.

Durch Steigerung des Strombelages im Stator und durch gleichzeitige Reduktion der Zusatzverluste konnten in den letzten Jahren die Einheitsleistungen von Turbogeneratoren erheblich vergrössert werden. Einen wesentlichen Beitrag hierzu leisteten dabei Massnahmen zur Verringerung des Stirnstreufeldes. Ein Bauteil, auf den das Stirnstreufeld einwirkt, sind die Pressplatten des Statorblechkörpers. In Pressplatten herkömmlicher Art können bedeutende Zusatzverluste mit örtlicher Konzentration und entsprechende Heisspunkte Auftreten. Dies beeinflusst nicht nur den Wirkungsgrad, sondern auch die Betriebssicherheit der Maschine und deren Fähigkeit, unter abnormalen Bedingungen (z.B. bei stärkerer Untererregung oder im Asynchronlauf) betrieben zu werden. Der eigentliche Kern des Problemkreises liegt im schroffen Übergang vom Aktivteil zum Stirnraum sowie im Fehlen eines magnetischen Isolators bzw. einer echten Magnetflusskanalisation ausserhalb des Blechkörpers. Diese Umstände, besonders die Randeffekte und unstetigen Konturverläufe, sowie die Rückwirkung induzierter Ströme erschweren jede genaue Berechnung des räumlichen Stirnfeldes und seiner Wirkungen.

Durch den Einsatz lamellierter Pressplatten konnten die vorstehenden Probleme durchgehend entschärft werden. Die lamellierte Pressplatte wird durch Aufstapeln und Verkleben gestanzter Elektrobleche zu einem Ring gewonnen, der durch Überdrehen der einen Seite eine konische Aussenkontur erhält. Der Statorblechkörper wird mit axial durchgehenden Zugbolzen und mit unmagnetischen Ankern, die gleichmässig an der Aussenfläche der Pressplatten aufliegen, zusammengepresst. Die konische Flanke der lamellierten Pressplatte wirkt wie ein kontinuierliches Auslaufen des aktiven Blechkörpers und Luftspaltes ins Unendliche. Wie das Feldbild in Fig. 9 a.a.O. beweist, wird auf diese Weise ein stetiger Übergang der Felddichten zwischen Luftspalt und Stirnraum erreicht; ausserdem findet ein grosser Teil des Stirnstreufeldes einen definierten Rückschluss im künstlich verlängerten Blechkörper. Besonders die stetigen Konturverläufe am Eisenende, die nur schwache Rückwirkung der Wirbelströme in den Blechtafeln auf das ankommende Feld und die daraus folgenden klaren Spiegelungsbedingungen sind es, die ideale Voraussetzungen für einfachere und schlüssige Feldanalysen schaffen.

Durch die günstige Einführung des Stirnfeldes in die lamellierte Pressplatte sind die Ummagnetisierungsverluste im Platteninnern gleichmässig verteilt und raumspezifisch kaum höher als im aktiven Blechkörper. Als Fortschritt gegenüber herkömmlichen Ausführungen ergeben sich daher relativ niedrige Zusatzverluste und ausgesprochen schwache Erwärmungen in diesem recht exponierten Maschinenteil.

Den vorstehend geschilderten vorteilhaften Eigenschaften einer lamellierten Pressplatte steht jedoch ein erhöhter Aufwand bei deren Fertigung gegenüber. Die einzelnen Elektroblechsegmente der Pressplatte dürfen sich nicht metallisch berühren. Bei der Bearbeitung der Stirnfläche entsteht nun aber öfters ein Grat, der in Radial- oder Umfangsrichtung zu einer metallischen Verbindung zwischen aufeinanderliegenden Segmenten führen kann. Diese Überbrückungsstellen können sich im Betrieb unzulässig hoch erwärmen und müssen deshalb beseitigt werden, was vor allem bei den radialen Schlüssen eine mühsame und zeitaufwendige Tätigkeit ist.

Aus der CH-A 425 981 ist eine Anordnung zum axialen Zusammendrücken und Zusammenhalten des Ständerblechpakets einer rotierenden elektrischen Maschine bekannt, welche Anordnung an jedem Ständerende eine Anzahl radial gerichteter Druckfinger aufweist, die je eine axiale Kraft auf einen Ständerzahn ausüben. Die Länge der Druckfinger ist grösser als der Unterschied zwischen dem inneren und äusseren Durchmesser des Ständerkerns. Jeder Druckfinger ist aus einem ersten Teil aus unmagnetischem Material und einem zweiten Teil aus ferromagnetischem Material zusammengesetzt, welche Teile miteinander verschweisst sind. Der erste (unmagnetische) Teil liegt wenigstens am Hauptteil der radialen Strecke zwischen der Zahnwurzel und dem Aussenumfang des Ständerkerns an, während der zweite (ferromagnetische) Teil sich im Bereich des Aussenumfangs des Ständerkerns und an einem Stützelement zwischen Statorrücken und Gehäusewand abstützt. Der erste Teil ist mit einer Abstufung ausgebildet, die an einer entsprechend abgestuften Fläche am Ständerende anliegt, welche dadurch hergestellt worden ist, dass die äussersten Ständerbleche mit einem axial nach innen zunehmenden Innendurchmesser ausgeführt wurden.

Nachteilig an der bekannten Anordnung ist zum einen die beträchtliche axiale Ausladung der Druckfinger und ihr vergleichweise komplizierter Aufbau aus unterschiedlichen Materialien. Zum anderen müssen die Abstützflächen an den Ständerzähnen und an den mit diesen zusammenwirkenden Bereichen der Druckfinger gut aneinander angepasst werden, um eine gleichmässige Druckverteilung zu gewährleisten.

Ausgehend vom Bekannten liegt der Erfindung die Aufgabe zugrunde, einen Statorkörper mit lamellierter Pressplatte zu schaffen, der in einfacher und wirtschaftlicher Weise zu fertigen ist, sich durch geringe Ausladung der Mittel zum Zusammenpressen des Statorkörpers auszeichnet und geringstmögliche Zusatzverluste aufweist.

Die Lösung dieser Aufgabe erfolgt durch die im unabhängigen Patentanspruch gekennzeichneten Merkmale.

Die Erfindung eignet sich insbesondere für Pressplatten mit kleinen Stufen, wo eine Anpassung der Gegenflächen zu sehr aufwendig wäre. Die radialen Kräfte werden sicher durch die erfindungsgemässe Ausbildung der Pressanker in Form von Ringsegmenten oder durch alle Pressanker umfassende Halteringe aufgenommen.

Wegen der einzuhaltenden elektrischen Abstände werden generell dort, wo aus konstruktiven und/oder Festigkeitsgründen vertretbar, Pressanker bzw. Pressankerteile und gegebenenfalls Halteringe aus Isoliermaterial eingesetzt.

Weitere Einzelheiten und Weiterbildungen des Erfindungsgegenstandes werden nachfolgend anhand von in der Zeichnung dargestellten Ausführungsbeispielen näher erläutert. In der Zeichnung zeigt:

Fig. 1 einen Längsschnitt durch den Endbereich eines Statorblechkörpers mit einer lamellierten Pressplatte nach dem Stand der Technik,

Fig. 2 das Detail aus Fig. 1, das die aus mechanischer Bearbeitung der konischen Stirnfläche der Pressplatte resultierenden Überbrückungsstellen an zwei aufeinanderliegenden Blechen in vergrössertem Massstab verdeutlicht,

Fig. 3 eine nicht zur Erfindung gehörende Anordnung mit einer gestuften Pressplatte und einem der Kontur der Pressplatte angepasstem Pressanker im Längsschnitt,

Fig. 4 das Detail Y aus Fig. 3 in vergrössertem Massstab,

Fig. 5 ein Ausführungsbeispiel der Erfindung mit einer gestuften Pressplatte und einem Pressanker mit glatter Gegenfläche mit Druckkissen zwischen Pressplatte und Pressanker,

Fig. 6 das Detail 7 aus Fig. 5 in vergrössertem Massstab,

Fig. 7 eine Stirnansicht auf die Stirnfläche einer Pressplatte nach Fig. 5,

Fig. 8 einen Radialschnitt durch die Pressplatte gemäss Fig. 7 längs deren Linie AA in vergrössertem Massstab, und

Fig. 9 eine Abwandlung zur Anordnung nach Fig. 5 mit radial versetzten zweiteiligen Pressankern mit Halteringen.

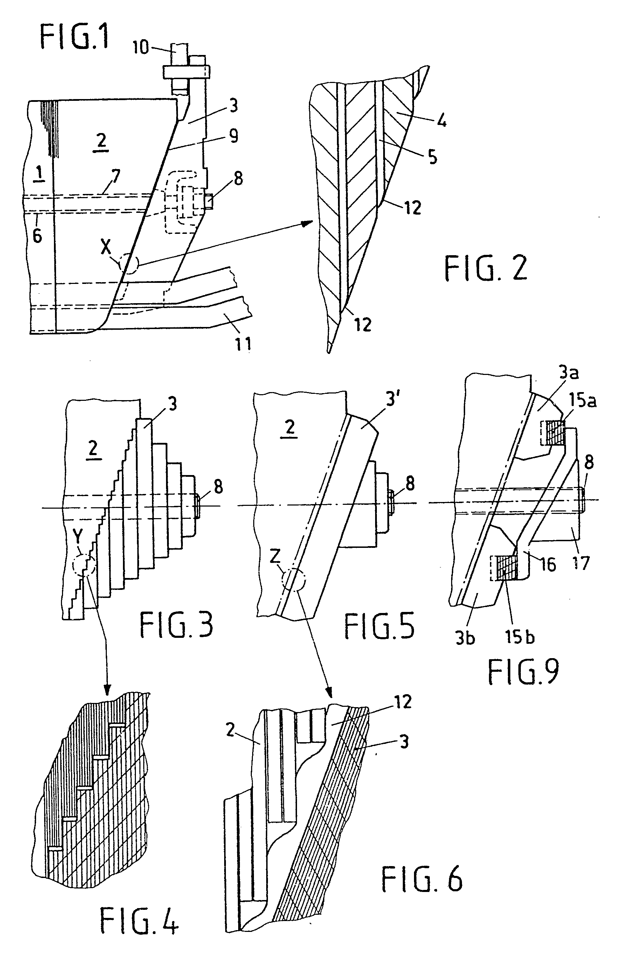

In Fig. 1 ist ein Statorblechkörper 1, eine lamellierte Pressplatte mit 2 und ein Pressanker mit 3 bezeichnet. Die Pressplatte 2 ist aus miteinander verklebten Elektroblechen 4 mit dazwischenliegenden Isolationsschichten 5 (Fig. 2) aufgebaut. Die in axial verlaufenden Bohrungen 6 und 7 im Statorblechkörper 1 bzw. Pressplatte 2 angeordneten Zugbolzen 8 pressen den Statorblechkörper in axialer Richtung zusammen. Zur Vermeidung von Kurzschlüssen zwischen benachbarten Blechlagen der Pressplatte 2 ist zwischen dieser und der Auflagefläche der Pressanker 3 eine Isolationszwischenlage 9 angeordnet. Aufgrund der Konizität der Stirnfläche der Pressplatte 2 wirkt auf die Pressanker 3 eine Kraftkomponente in radialer Richtung, welche durch eine radiale Abstützung der Pressanker 3 am Gehäuse aufgenommen wird. Zu diesem Zweck reichen die Pressanker 3 über die Pressplatte 2 hinaus und sind an einen nach innen gerichteten Gehäuseteil 10 befestigt. Aus Gründen der Vollständigkeit ist in Fig. 1 ein Teil der in Nuten des Statorblechkörpers 1 angeordneten Statorwicklung 11 eingezeichnet.

In Fig. 2 ist veranschaulicht, wie die mechanische Bearbeitung der konischen Stirnfläche der Pressplatte 2 zu Gräten 12 führt, die zu Kurzschlüssen zwischen aufeinanderliegenden Blechen 4 führen, welche vor dem Einbau der Pressplatte grösstenteils in Handarbeit beseitigt werden müssen.

Die beschriebene radiale Abstützung der Pressanker 3 sowie die Bearbeitung der Stirnflächen der Pressplatte 2 (Überdrehen, Beseitigung der Blechschlüsse) lassen sich vermeiden, wenn die besagte Stirnfläche nicht mehr überdreht und demgemäss abgestuft bleibt. In Fig. 3 und 4 (die nicht eine Ausführungsform der Erfindung zeigen) weist die Pressplatte 2 eine regelmässig abgestufte Aussenkontur auf. Der Pressanker 3 besteht zum wesentlichen Teil aus Schichtpressstoff aus Isoliermaterial, z.B. glasfaserverstärktem Kunststoff, und weist auf der der Pressplatte 2 zugewandten Fläche eine der Stufung der Pressplatte 2 angepasste Kontur auf.

Die Pressplatte 2 ist aus einzelnen Blechsegmenten aus Elektroblech, die lagenweise versetzt sind, aufgebaut. Die einzelnen, gegeneinander isolierten Blechlagen sind unter Anwendung von Druck und/oder Wärme miteinander verklebt, wobei die bekannte Backlack oder Tauchverklebung angewandt wird. Dies sichert einen mechanisch stabilen Aufbau der Pressplatte auch ausserhalb des Einflusskegels der Pressanker 3.

Die moderne Blechstanztechnik ermöglicht heute praktisch stanzgratfreie Werkstücke, so dass Kurzschlüsse zwischen aufeinanderliegenden Blechlagen nicht auftreten.

Die Pressanker 3 können einstückig oder aus mehreren miteinander verklebten Einzelplatten zusammengesetzt sein. Es kann jedem Zugbolzen 8 (auf jeder Maschinenseite) jeweils ein separater Pressanker 3 zugeordnet sein. Die Pressanker 3 können sich jedoch in Umfangsrichtung über mehrere Zugbolzen erstrecken und im Grenzfall als Druckring ausgebildet sein, wobei der Druckring bzw. die Drucksegmente Aussparungen aufweisen, welche eine freie Verbindung zwischen den axialen Kühlgasbohrungen im Statorblechkörper/Pressplatte mit dem Aussenraum gewährleisten.

Die Abstufung der Stirnfläche der Pressplatte in radialer Richtung richtet sich nach dem gewünschten Konuswinkel (ca. 15°). In Axialrichtung bilden zwischen 1 und 10 Blechlagen eine Stufe (Fig. 4).

In der Ausführungsform nach Fig. 5 ist lediglich die Pressplatte 2 gestuft, während, im Gegensatz zur Anordnung gemäss Figuren 3 und 4, die Gegenfläche des Pressankers glatt ist, und wobei zwischen den beiden Teilen ein Druckkissen 9 eingelegt ist. Das Druckkissen besteht aus Isoliermaterial.

Analog zur Anordnung nach Fig. 3 bzw. Fig. 4 sind hier die Pressanker 3 als mehrere Zugbolzenbohrungen 6 übergreifende Pressegmente 3' (Fig. 7) oder als Pressring ausgebildet, die sich in Umfangsrichtung berühren. Auf diese Weise sind auch hier separate Mittel zur Abstützung der Presssegmente 3' bzw. des Pressrings entbehrlich, da die radialen Kräfte vom Gewölbedruck aufgenommen werden.

Neben den Durchgangsbohrungen 6 für die Zugbolzen 8 weist der Statorblechkörper 1 und auch die Pressplatte 2 Kühlgasbohrungen 13 auf. Aus Fig. 8 ist ersichtlich, dass durch Einbringen radial verlaufender Nuten 14 in der der Pressplatte zugewandten Oberfläche des Pressegments 3' welche Nuten 14 mit den Kühlgasbohrungen 13 in freier Verbindung stehen, die Kühlgasströmung (verdeutlicht durch Pfeile) nicht beeinträchtigt wird. Anstelle der Nuten 14 können auch Bohrungen 14' in den Presssegmenten vorgesehen sein, wie es in Fig. 8 strichliert angedeutet ist.

Fig. 9 zeigt eine weitere Ausführungsform der Erfindung mit separaten, zweiteiligen Pressankern 3a, 3b, die sich jeweils an einem Abstützring 15a bzw. 15b abstützen. Die Zugkraft des Zugbolzens 8 wird dabei über ein beide Ringe erfassendes Verbindungsteil 16 mit Anpasskeil 17 auf die beiden Pressankerteile 3a und 3b übertragen.

## Patentansprüche

1. Statorkörper mit einem zwischen zwei Pressplatten (2) und mittels durchgehenden Zugbolzen (8) und unmagnetischen Pressankern (3) axial verspannten Statorkörpern (1), wobei die Pressplatte (2) aus aufeinandergestapelten und miteinander verklebten Blechen (4) besteht und auf der dem Blechpaket abgewandten Aussenfläche eine konische Aussenkontur aufweist, dadurch gekennzeichnet, dass die Pressplatte (2) eine gestufte Aussenkontur mit Stufen gleicher oder unterschiedlicher radialer und/oder axialer Grösse aufweist, die Pressanker (3'; 3a, 3b) unter Zwischenschaltung einer Füllmasse oder eines Druckkissens (9) auf der Pressplatte (2) aufliegen und in radialer Richtung durch einen mit den Pressankern (3'; 3a, 3b) zusammenwirkenden geteilten oder ungeteilten, gemeinsamen Druckring (15a, 15b) abgestützt sind oder der Pressanker selbst als Pressring (3') ausgebildet ist.

2. Statorkörper nach Anspruch 1, dadurch gekennzeichnet, dass der Pressanker ringförmig oder an einzelne Ringsegmente (3') ausgebildet und auf der der Pressplatte (2) zugewandten Fläche radial verlaufende Ausnehmungen (14; 14') aufweist, welche mit axialen Kühlgasbohrungen (13) in der Pressplatte (2) kommunizieren.

3. Statorkörper nach Anspruch 1 oder 2, dadurch gekennzeichnet, dass der Pressanker mehrteilig ausgebildet ist und die Pressankerteile (3a, 3b) in Umfangsrichtung durch einen Abstützring (15a, 15b) miteinander verbunden sind, auf welchen Ring sich die einzelnen Pressankerteile (3a, 3b) in radialer Richtung abstützen, und dass die Zugbolzen (8) über Verbindungsteile (16), über die Abstützringe (15a, 15b) und damit die Pressankerteile (3a, 3b) wirken.

4. Statorkörper nach Anspruch 1 oder 2, dadurch gekennzeichnet, dass der Pressanker ein Ring aus faserverstärktem Kunststoff mit in Umfangsrichtung wie in radialer Richtung verlaufende Fasern oder aus entsprechend aufgebauten Ringsegmenten (3') ist, dessen konische Auflagefläche mit radial verlaufenden Nuten versehen ist, welche Nuten mit axialen Kühlgasborhungen in der Pressplatte kommunizieren.

## Claims

1. Stator body having a stator body (1) which is axially clamped between two compression plates (2) and by means of tension bolts (8) passing through it and nonmagnetic tie plates (3), in which arrangement the compression plate (2) consists of laminations (4) which are stacked together and bonded to each other and has a conical outside contour on the outside surface facing away from the stack of laminations, characterised in that the compression plate (2) is provided with a stepped outside contour having steps of equal or different radial and/or axial size, the tie plates (3'; 3a, 3b) rest against the compression plate (2) with interposition of a filling compound or of a pressure pad (9) and are supported in the radial direction by a split or unsplit, common pressure ring (15a, 15b) which acts in conjunction with the tie plates (3'; 3a, 3b) or the tie plate itself is constructed as a pressure ring (3').

2. Stator body according to Claim 1, characterised in that the tie plate is constructed to be annular or having individual annular segments (3') and has on the surface facing the compression plate (2) radiallyextending recesses (14; 14') which communicate with axial holes (13) for cooling gas in the compression plate (2).

3. Stator body according to claim 1 or 2, characterised in that the tie plate is constructed of several parts and the tie plate parts (3a, 3b) are connected to each other in the peripheral direction by a support ring (15a, 15b) on which ring the individual tie plate parts (3a, 3b) are supported in the radial direction, and that the tension bolts (8) act via links (16) via the support rings (15a, 15b) and thus the tie plate parts (3a, 3b).

4. Stator body according to Claim 1 or 2, characterised in that the tie plate is a ring of fibre-reinforced plastic having fibres which extend in the peripheral direction and in the radial direction or of annular segments (3') which are correspondingly constructed and the conical support face of which is provided with radially-extending grooves which grooves communicate with axial holes for cooling gas in the compression plate.

**Revendications**

1. Corps de stator avec un corps de stator (1) comprimé axialement entre deux plaques de pression (2) et au moyen de tirants traversants et d'armatures de pression (3) amagnétiques, dans lequel la plaque de pression (2) se compose de tôles (4) empilées et collées l'une à l'autre et présente un profil extérieur conique sur sa face extérieure située à l'opposé du paquet de tôles, caractérisé en ce que la plaque de pression (2) présente un profil extérieur étagé avec des gradins de grandeur radiale et/ou axiale égale ou différente, en ce que les armatures de pression (3'; 3a, 3b) s'appuyent sur la plaque de pression avec interposition d'une masse de remplissage ou d'un coussin de pression (9), et en ce qu'elles sont supportées en direction radiale par un anneau de pression commun (15a, 15b), en une ou plusieurs pièces, coopérant avec les armatures de pression (3'; 3a, 3b) ou que l'armature de pression elle-même a la forme d'un anneau de pression (3').

2. Corps de stator suivant la revendication 1, caractérisé en ce que l'armature de pression est annulaire ou est constituée de segments d'anneau individuels (3') et présente dans sa face tournée vers la plaque de pression (2) des évidements (14; 14') allongés radialement, qui communiquent avec des passages axiaux (13) pour le gaz de refroidissement dans la plaque de pression (2).

3. Corps de stator suivant la revendication 1 ou 2, caractérisé en ce que l'armature de pression est constituée de plusieurs parties et que les parties (3a, 3b) de l'armature de pression sont réunies l'une à l'autre en direction circonférentielle au moyen d'un anneau d'appui (15a, 15b), anneau sur lequel chacune des parties (3a, 3b) prend appui en direction radiale, et en ce que les tirants (8) agissent par l'intermédiaire de pièces de liaison (16) sur les anneaux d'appui (15a, 15b) et ainsi sur les parties (3a, 3b) de l'armature de pression.

4. Corps de stator suivant la revendication 1 ou 2, caractérisé en ce que l'armature de pression est constituée par un anneau en matière plastique renforcée par des fibres avec des fibres orientées en direction circonférentielle ainsi qu'en direction radiale, ou par des segments d'anneau correspondants (3'), dont la surface d'appui conique est pourvue de rainures radiales, lesquelles rainures communiquent avec des passages axiaux pour le gaz de refroidissement dans la plaque de pression.

FIG.1

FIG. 2

FIG.3

FIG.5

FIG.9

FIG.4

FIG. 6

FIG.7

FIG.8